# EUROPEAN PATENT SPECIFICATION

(11) **EP 0 496 046 B1**
(45) Date of publication and mention of the grant of the patent: **11.01.1995**
(21) Application number: 91119225.0
(22) Date of filing: 12.11.1991
(51) Int. Cl.: B65G 47/08, B65G 17/00

(54) **Apparatus for conveying and grouping products**
Vorrichtung zum Fördern und Gruppieren von Produkten
Appareil pour transporter et grouper des produits

(30) Priority: 21.01.1991 IT 12191
(43) Date of publication of application: 29.07.1992
(73) Proprietor: GECA S.R.L., I-20131 Milano (IT)
(72) Inventor: Colombo, Angelo, I-22050 Dervio (Como) (IT)
(74) Representative: Dr. Ing. A. Racheli & C. S.r.l.

(56) References cited:
- EP-A- 0 276 409
- EP-A- 0 316 990
- DE-A- 3 223 332
- DE-A- 3 629 372
- GB-A- 1 411 940

## Description

The object of the present invention is an apparatus for conveying and orderly grouping products or packs coming one after the other from one or more supply conveyors, particularly packaging lines in the foodstuffs sector or in other packing sectors.

Apparatuses of the above type are already known and are mainly utilized for transferring foodstuffs or other products, on leaving a wrapping machine, to a subsequent packing or cartoning station where such products are taken in groups and put into suitable boxes.

These apparatuses, as far as possible, must even out the different feed rate or the discontinuities of the incoming products. For this purpose, apparatuses have been planned in which the products are collected individually in independent seats or pockets, each carried by a trolley which is idle mounted on an endless conveyor. Such trolleys are operated only when the corresponding pockets have been filled with the product.

The operating means for the trolleys, which are normally idle, consist of purely mechanical means, such as, for example, friction shoes, belts, bands, and suchlike. This leads to the apparatus having a very complex structure, but, more especially, these means are subject to wear and therefore breaking as time goes on.

An apparatus of such type is disclosed in EP-A-316990, which provides friction pads positioned between the trolleys and the conveyor, and pushed against the conveyor by means of elastic thrust elements secured to the trolleys.

This is a serious problem, if it is considered that the said apparatuses are, in most cases, included in foodstuff production lines, such as lines for producing icecream or oven-baked products, and for this reason any downtime of the apparatus, in order to be able to carry out the replacement of a damaged piece, involves considerable loss of the product, which continues to be fed in by the lines upstream.

The aim of the invention is to eliminate the above drawbacks by providing an apparatus for conveying, collecting and grouping products or packs, which is structurally simple and in which the risks of failure due to wear have been reduced to a minimum, if not entirely removed, by the complete elimination of mechanical operating means for the independent trolleys.

The aim is achieved, according to the invention, by means of the characteristics listed in the appended claims.

In particular, the idle trolleys, which run inside an endless conveyor, have an inner plate made of metal, particularly copper, suitable for receiving an electromagnetic thrust flux at certain points of their run, generated by special linear electric motors.

The endless conveyor consists of two double lateral chains, whose outer rollers receive their motion by means of normal toothed sprocket wheels and are guided by special chain guides, while the inner rollers guide the trolleys which, even though they are idle, advance along the conveyor path by the effect of their own weight.

The linear motors which generate the electromagnetic thrust flux for the trolleys are positioned at the most convenient points inside the endless conveyor, and particularly in the zone where the trolleys must collect in order to provide for an uninterrupted presence of pockets at the point where the products are fed in, and at least in the zone where such products collect for subsequent cartoning or packaging.

Further characteristics of the invention will be more clearly understood from the following detailed description which refers to an exemplary and non-restrictive embodiment, illustrated in the appended drawings, in which:
- Figure 1: is a perspective diagrammatic view of an apparatus for conveying, collecting and grouping products according to the invention, with only one feeding line;
- Figure 2: is a top plan view of such apparatus;
- Figure 3: is a longitudinal diagrammatic sectional view, taken along the line III-III in figure 2;
- Figure 4: is a transverse sectional view, taken along the line IV-IV in figure 3;
- Figure 5: is a partial diagrammatic top plan view of an apparatus according to the invention, with two feeding lines for the products and with regular functioning;
- Figure 6: is a diagrammatic sectional view, taken along the line VI-VI in figure 5;
- Figure 7: is a view like the one in figure 5, with irregular feeding of the products on the two lines;
- Figure 8: is a diagrammatic sectional view taken along the line VIII-VIII in figure 7.

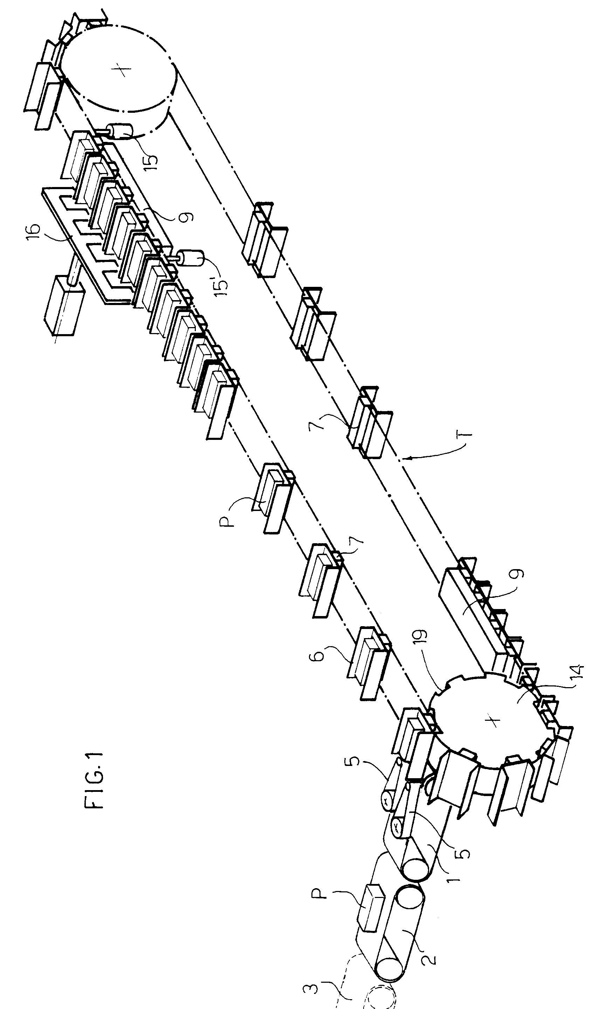

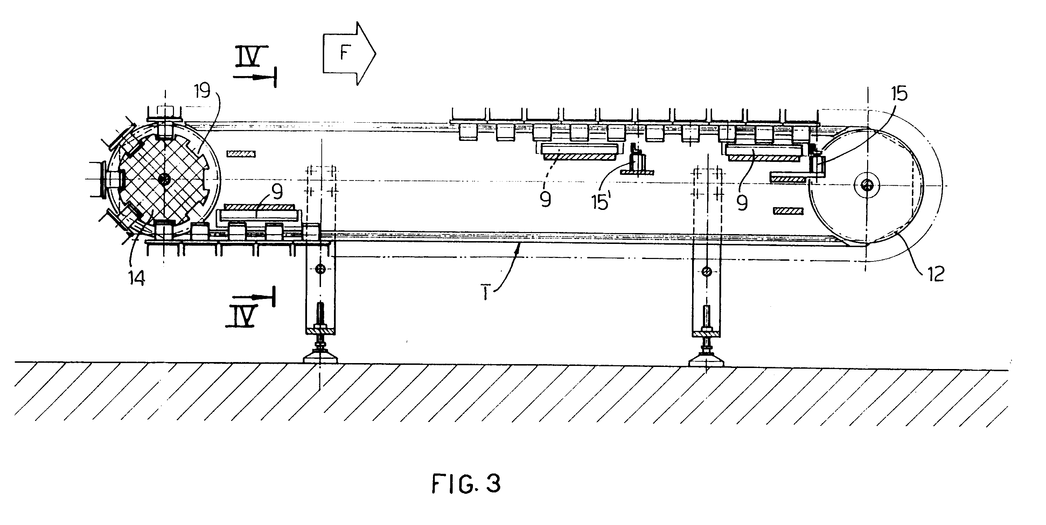

In the figures 1 to 4, reference number 3 shows a feeder belt, coming for example from a wrapping machine, by which the products P, which may be at irregular intervals, are transferred to two variable speed belts 2 and 1, along which photoelectric cells 4 are located, which detect the presence of the products P and the distance between them, which may be varied with the sudden variation of the speed of the belts 1 and 2, which are controlled by an electronic numerical control system. In this way a minimum distance is always guaranteed between the products, which is indispensable for their subsequent introduction into the individual collection pockets 6, to be described more fully later, said pockets moving forward in the direction of arrow F (figure 3), along an endless conveyor T. In the final section of belt 1 two side belts 5 are provided, which, when particularly high speeds are involved, can move slightly in the direction of the forward movement of the collection pockets 6, acting as a guide for the product P and therefore further facilitating its introduction.

The collection pockets 6 are fixed to respective idle trolleys 7, made of antifriction material.

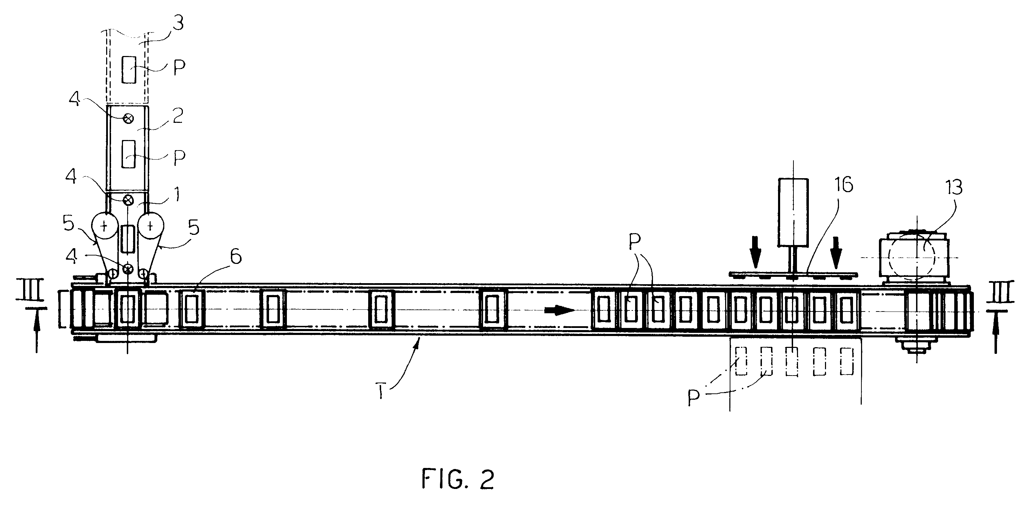

All the trolleys 7, whose number can vary according to the feeding speeds required, the type of grouping desired etc. run on endless conveyor T, which consists of two double chains 10, in which outer rollers 17 are guided by chain guides 11 also made of antifriction material, and receive their motion by means of normal toothed sprocket wheels 12 positioned at one end of the path of the endless conveyor (figure 3), said wheels being driven by a motor 13 (figure 2); inner rollers 18 guide the trolleys 7, which, although they are idle, move forward along the endless conveyor path by the effect of their own weight.

At the end of the endless conveyor opposite to the one where the motorized sprocket wheels 12 are positioned, a splined wheel 14 is foreseen, having a plurality of equally spaced seats 19 on its periphery, whose task is that of feeding the trolleys 7 and the relative pockets 6 in a constant manner in the upper loading zone, at the exit from the belt 1.

Obviously the grooved or splined wheel 14 is operated independently of the sprocket wheels 12 at variable speed, under control of photocells 4 for detecting the product P, in such a way as to enable it to adapt to the arrival speeds of the same, given that these speeds can vary; in the case of a failure in feeding the product, the wheel 14 will stop suddenly to avoid pockets 6 leaving the loading zone without product.

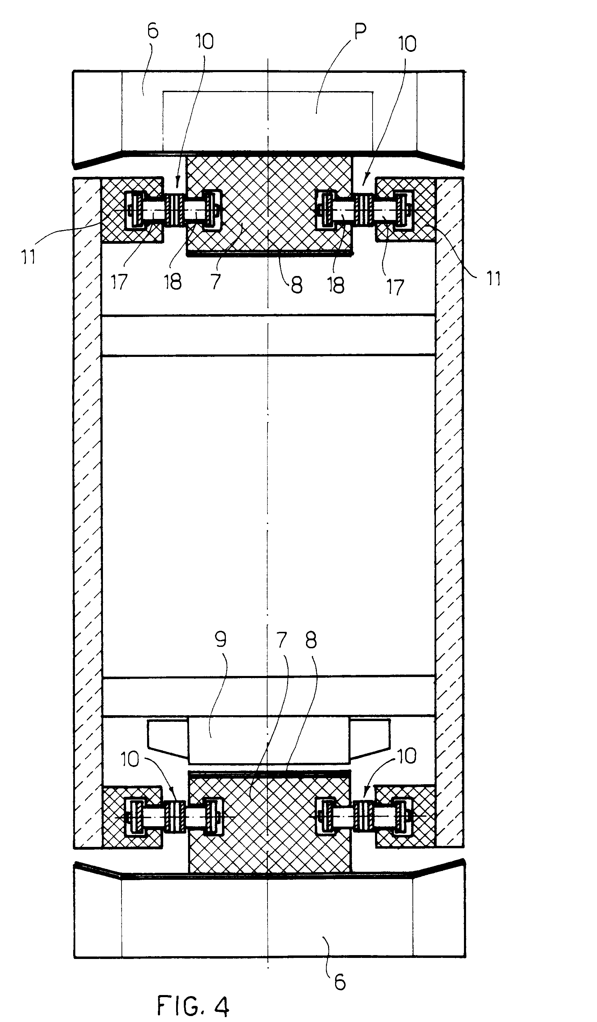

Likewise it must be guaranteed that a trolley 7 must be housed in each seat 19 of the splined wheel 14, so a to avoid the product P being transferred from the belt 1 to the conveyor T without a corresponding collection pocket 6 being present. For this purpose, in correspondence with the lower inner part of the conveyor T, immediately before the splined wheel 14, a linear motor 9 is located whose electromagnetic thrust flux acts on the trolleys 7 with empty pockets 6, to ensure a thrust at the entrance of the splined wheel 14. This is obtained by providing on the lower part of each trolley 7 a plate 8 made of metal, particularly copper (see figure 4 in particular), which constitutes in particular the secondary to the linear motor (primary) by which the electromagnetic flux is closed.

The electric linear motors used in the apparatus according to the invention are to be considered as already known in themselves and therefore no further description of them will be given. The advantage of using such linear motors lies in the fact that between them, or better the inductors or primary motors, and the plates 8 provided inside the trolleys 7 a free space is left, and therefore there is no physical contact between such elements, and so any possibility of wear on the latter is eliminated.

Once the product is loaded into a corresponding pocket 6 the respective trolley 7 is liberated by further rotation of the splined wheel 14 and is left to be transported freely on the upper run of the chain conveyor T. In the final zone of the conveyor T a lower stop or lock 15 halts the trolleys 7 on arrival, which collect and allow an upper switch 16 to move a certain number of products (five in the example shown in the appended figures), in a zone where they can be subsequently collected by known devices, such as collector arms with suckers, hands, robots, unloading hoppers and the like, for final packaging in corrugated cardboard boxes and the like. In addition to the end timing stop 15 a second timing stop 15' is foreseen to determine the number of products to be grouped together before cartoning.

As shown in figures 1 and 3, a linear motor 9 can be foreseen also in a switching and collection zone to keep the trolleys being driven forward and subsequently accelerate them for emptying, when the stop 15 moves down, after the group of products P has been expelled from the pockets 6.

A further linear motor 9 may also be provided upstream of stop 15', as shown with a broken line in figure 3, to accelerate the moving forward of the products towards the collection zone, as soon as the stop 15' moves down. Obviously the number and the position of the linear motors 9 can differ according to particular needs.

It is also clear that the size of the linear motors 9 will also be planned on the basis of particular requirements.

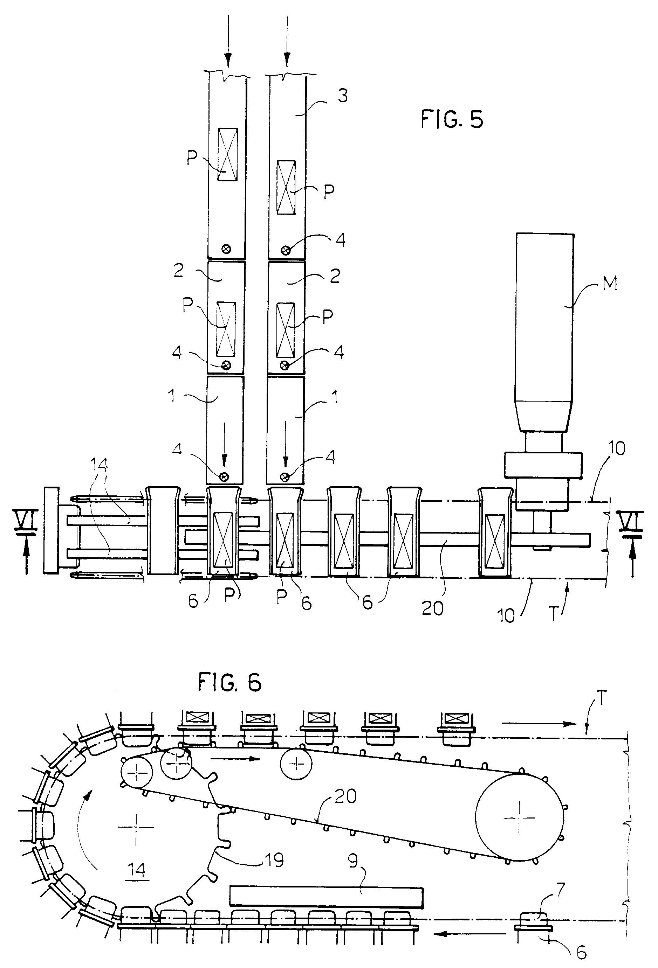

An embodiment according to figures 5 to 8 will be now briefly described, using the same reference numbers as those already used for the figures 1 to 4 to indicate the same or similar parts. It will be noted that the apparatus has not been shown in its whole, since it is substantially identical to the one already described and from which it differs only in that it provides, instead of one, more feeding belts 3 for the products P, with respective variable speed bands 2 and 1 and photocells 4 to detect the presence of the products P and the distance between them.

In the figures an embodiment with two feeding lines has been shown, but obviously more lines can be foreseen.

The collection pockets 6 are positioned in the respective filling zones by a toothed belt 20 to which they are fed in phase by the splined wheel 14, consisting in this case of two star disks, between which an end portion of the belt 20 is positioned. The toothed belt 20 is operated by a motor M that is different from the operating motor of the star wheel 14.

If the products are fed regularly (figures 5 and 6), the toothed belt 20, regularly fed by the wheel 14, presents two pockets 6 in the loading position to collect the products P, that, after loading, are taken for a certain length by the belt 20 and then left on the chains 10 of the conveyor T, where they move forward by the effect of their own weight (figure 6).

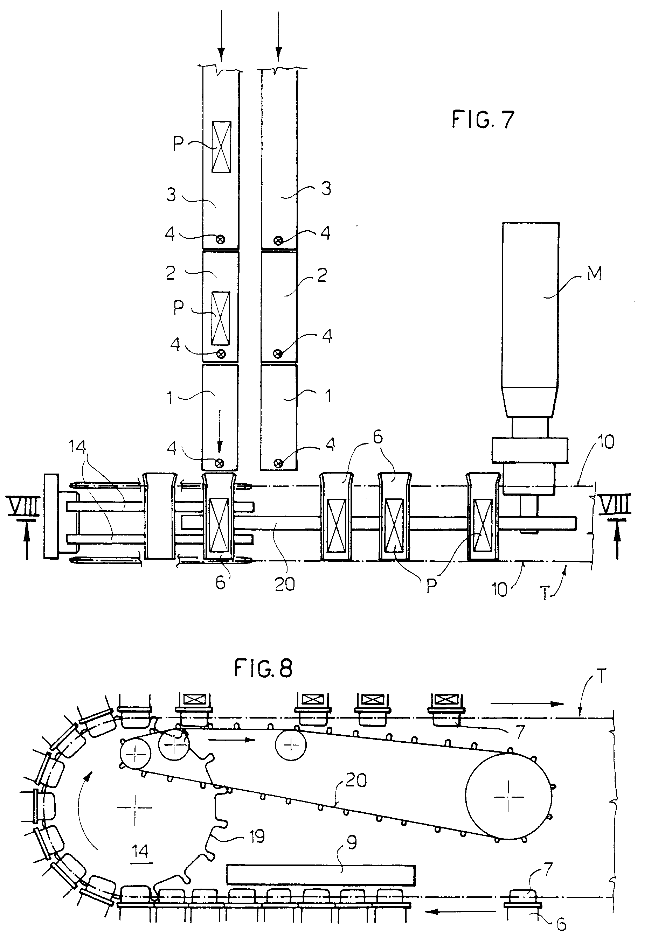

If the products P are fed irregularly, the wheel 14 interrupts the feeding to the toothed belt 20 of the pocket aimed at the line without product (the one on the right in the example in figure 7), but keeps on feeding the pockets aimed at the line where the products P are regularly loaded (the one on the left in figure 7).

## Claims

1. An apparatus for conveying, collecting and grouping products or packs (P), coming from at least one conveyor (3) at the exit from a production line, which are directed towards cartoning for example, comprising an endless conveyor (T), on which a number of idle trolleys (7) run and are provided with respective collection pockets (6), into which the products (P) are individually received, to be subsequently conveyed, collected and grouped, characterized in that inside the closed loop path of said endless conveyor (T) at leapt one means (9) is provided which generates an electromagnetic thrust flux in the direction of the forward movement of the conveyor (T), said flux being collected by metal plates (8) disposed on the side of each trolley (7) turned to said means (9) with a free space therebetween, in such a way that the trolleys are accelerated in the zone of the means (9), without any physical contact being exercised on them.

2. An apparatus according to claim 1, characterized in that the at least one means (9) is a linear electric motor.

3. An apparatus according to claim 2, characterized in that a linear motor (9) is foreseen immediately before the product (P) loading zone, to guarantee always the presence of pockets (6) in such zone.

4. An apparatus according to claim 2 or 3, characterized in that a linear motor (9) is foreseen in the collection and grouping zone for the trolleys with pockets (6) filled with products (P), in order to facilitate the evacuation of the trolleys after the products have been expelled.

5. An apparatus according to claim 1, characterized in that the said plates (8) are of copper.

6. An apparatus according to any one of the previous claims, characterized in that the said endless conveyor (T) consists of two double lateral chains (10), in which the external rollers (17) are guided by special chain guides (11) and receive their motion by means of toothed sprocket wheels (12) foreseen at one end of the endless conveyor, while the inner rollers (18) guide the trolleys which, although they are idle, move forward along the conveyor path by the effect of their own weight, an independently operated splined wheel (14) being foreseen at the end of the conveyor (T) opposite to the one where the sprocket wheels (12) are foreseen, provided with seats (19) for collecting the trolleys (7).

7. An apparatus according to any one of the previous claims, characterized in that between the apparatus itself and the said at least one feeding conveyor (3) of the product (P) two variable speed belts (2, 1) are positioned, along which photoelectric cells (4) are located for detecting the distance between the products, which can be varied by varying the speed of the belts themselves.

8. An apparatus according to claim 7, characterized in that on the final length of the said conveyor belt (1) two lateral belts (5) are foreseen which can move slightly in the advancing direction of the collection pockets (6) in order to facilitate the introduction of the products (P) into the pockets, with particularly high speed.

9. An apparatus according to claim 7, characterized in that the rotational speed of the said splined wheel (14) varies according to the speed at which the product is fed.

10. An apparatus according to any one of the previous claims, characterized in that it is provided with more than one feeding line (3) and with a toothed belt (20) which is fed in phase by the splined wheel (14), in such a way that a pocket (6) is set in correspondence with each line (3) regularly feeding a product (P).

## Patentansprüche

1. Vorrichtung zum Befördern, Sammeln und Gruppieren von Produkten oder Bündel (P), zugeführt von mindestens einem Förderer (3) am Ausgang einer Produltionslinie, die beispielsweise zur Karton-Verpackung gerichtet sind, umfassend einen Endlosförderer (T) auf dem eine Anzahl leerlaufender Laufwagen (7) sich bewegen, die mit besonderen Sammeltaschen (6) versehen sind, in die die Produkte (P) einzeln aufgenommen werden, um anschliessend bewegt, gesammelt und gruppiert zu werden, dadurch gekennzeichnet, dass innerhalb der geschlossenen Schleifenbahn des Endlosförderers (T) mindestens ein Mittel (9) vorgesehen ist das einen elektromagnetischen Verschiebungsfluss in Fortbewegungsrichtung des Förderers (T) erzeugt, wobei dieser Fluss durch Metallplatten (8) aufgenommen wird, vorgesehen auf der Seite eines jeden Laufwagens (7) der diesem Mittel (9) zugekehrt ist, mit dazwischen freiem Raum derart, dass die Laufwagen im Bereich des Mittels (9) herschleunigt sind, ohne dass auf diese irgend ein physikalischer Kontakt ausgeübt wird.

2. Vorrichtung nach Anspruch 1, dadurch gekennzeichnet, dass das zumindest ein Mittel (9) ein elektrischer Linearmotor ist.

3. Vorrichtung nach Anspruch 2, dadurch gekennzeichnet, dass ein Linearmotor (9) unmittelbar von der Ladebereich der Produkte (P) vorgesehen ist, um stets die Gegenwart von Sammeltaschen (6) in diesem Bereich zu garantieren.

4. Vorrichtung nach Anspruch 2 oder 3, dadurch gekennzeichnet, dass ein Linearmotor (9) im Sammel-und-Gruppierungsbereich für die mit Produkte (P) aufgefüllten Taschen (6) vorgesehen ist, und damit das Entfernen der Laufwagen nach dem Ausstossen der Produkte, zu erleichtern.

5. Vorrichtung nach Anspruch 1, dadurch gekennzeichnet, dass die Platten (8) aus Kupfer sind.

6. Vorrichtung nach einem der vorausgehenden Ansprüche, dadurch gekennzeichnet, dass der Endlosförderer (T) aus zwei doppelten seitlichen Ketten (10) besteht, in denen die äusseren Rollen (17) mit Hilfe von speziellen Kettenführungen (11) geführt sind, und ihre Bewegung durch gezahnte Ritzel (12) erhalten, die an einem Ende des Endlosfördereres vorgesehen sind, während die inneren Rollen (18) die Laufwagen führen die, obgleich sie leerlaufen, entlang der Förderbahn sich vorwärtsbewegen, aufgrund ihrer Eigengewichts, wobei am Ende des Förderers (T), gegenüber jenem auf dem die Ritzel (12) vorgesehen sind, ein Nutenrad (14) vorgesehen ist, das unabhängig bewegt wird, versehen mit Auflagen (19) mm Sammeln der Wagen (7).

7. Vorrichtung nach einem der vorausgehenden Ansprüche, dadurch gekennzeichnet, dass zwichen der Vorrichtung selbst und wenigstens einem Beschickungsförderer für das Produkt (P) zwei Riemen (2, 1) mit veränderbarer Geschwindigkeit angeordnet sind, mit entlang liegenden photoelektrischen Zellen (4) für das Ermitteln des Abstandes zwischen den Produkten, der durch verändern der Geschwindigkeit der Riemen verändert werden kann.

8. Vorrichtung nach Anspruch 7, dadurch gelkennzeichnet, dass im Endbereich des Transportsförderers (1) zwei seitliche Riemen (5) vorgesehen sind, welche, in Fortbewegungsrichtung der Sammeltaschen (6) leicht bewegbar sind, zum Erleichterung des Einführens der Produkte (8) mit besonders hoher Geschwindigkeit, in die Taschen.

9. Vorrichtung nach Anspruch 7, dadurch gekennzeichnet, dass die Drehgeschwindigkeit des Nutenrades (14) ensprechend der Beschickungsgeschwindigkeit des Produktes sich verändert.

10. Vorrichtung nach einem der vorausgehenden Ansprüche, dadurch gekennzeichnet, dass diese mit mehr als nur einer Beschickungslinie (3) ausgerüstet ist und mit einem Zahnriemen (20), der in Phase mit dem Nutenrad (14) beschickt ist, derart dass eine Sammeltasche (6) in Übereinstimmung mit einer jeden Linie (3) gebracht ist, die regelmässig ein Produkt (P) beschickt.

## Revendications

1. Appareil pour le transport, l'accumulation et le groupage de produits ou de confections (P) provenant au moins d'un convoyeur (3) sortant d'une ligne de production et se dirigeant, par exemple, à l'emballage, comprenant un transporteur à boucle fermée (T) sur lequel courent plusieurs chariots marchant à vide (7) pourvus de poches collectrices (6) dans lesquelles sont reçus les produits, un par un (P) pour leur transport successif, leur accumulation et leur groupage, caractérisé par le fait qu'à l'intérieur de la boucle fermée de ce transporteur à boucle fermé (T) il est prévu au moins un dispositif (9) exerçant un flux électromagnétique de poussée dans le sens d'avancement du transporteur (T), qui est recueilli par des plats métalliques (8) placés sur le côté de chaque chariot (7) tourné vers ce dispositif (9) en réservant un espace libre afin que les chariots soient accélérés dans la zone du dispositif (9) sans qu'aucun contact physique n'intervienne sur ces derniers.

2. Appareil suivant la revendication 1, caractérisé par le fait que sur cet appareil au moins un dispositif (9) est un moteur électrique linéaire.

3. Appareil suivant la revendication 2, caractérisé par le fait qu'un moteur linéaire (9) est prévu immédiatement avant la zone de chargement des produits (P), pour garantir constamment la présence de poches (6) dans cette zone.

4. Appareil suivant la revendication 2 ou 3, caractérisé par le fait qu'un moteur linéaire (9) est prévu dans la zone d'accumulation et de groupage des chariots à poches (6) avec les produits (P), pour faciliter l'évacuation de ces mêmes chariots après l'expulsion des produits.

5. Appareil suivant la revendication 1, caractérisé par le fait que les plats métalliques (8) sont en cuivre.

6. Appareil suivant l'une des revendications précédentes, caractérisé par le fait que ce transporteur à boucle fermée (T) se compose de deux chaînes latérales doubles (10) sur lesquelles les plus extérieures (17) sont guidées par des guide-chaînes (11) spéciaux et reçoivent le mouvement transmis par des pignons dentés (12) prévus à une extrémité de la boucle fermée, tandis que les rouleaux internes (18) guident les chariots qui, bien que marchant à vide, peuvent avancer le long du transporteur par l'effet de leur propre poids, à l'extrémité du transporteur (T) opposée à celle où se trouvent les pignons (12), étant donné qu'est prévue une roue cannelée (14, actionnée indépendamment, et pourvue de logements (19) pour recevoir les chariots (7).

7. Appareil suivant l'une des revendications précédentes, caractérisé par le fait qu'entre ce dernier et au moins l'un des transporteurs (3) d'alimentation des produits (P) se trouvent deux rubans à vitesse variable (2,1) le long desquels se trouvent des cellules photo-électriques (4) pour relever la distance entre les produits, qui peut être variée en variant la vitesse de ces rubans.

8. Appareil suivant la revendication 7, caractérisé par le fait que, sur le tronçon final de ce ruban transporteur (1) se trouvent deux courroies latérales (5) qui peuvent se déplacer légèrement dans le sens d'avancement des poches collectrices (6) pour favoriser l'introduction des produits (P) dans ces poches, à des vitesses particulièrement élevées.

9. Appareil suivant la revendication 7, caractérisé par le fait que la vitesse de rotation de cette roue cannelée (14) varie en fonction de la vitesse d'alimentation du produit.

10. Appareil suivant l'une des revendications précédentes où sont prévues plusieurs lignes d'alimentation (3) et une courroie dentée (20) alimentée en phase par la roue cannelée (14), de façon à présenter constamment une poche (6) en correspondance de chaque ligne (3) qui alimente régulièrement un produit (P).
